# EUROPÄISCHE PATENTSCHRIFT

(11) **EP 0 723 144 B1**
(45) Veröffentlichungstag und Bekanntmachung des Hinweises auf die Patenterteilung: **09.08.2000**
(21) Anmeldenummer: 96890008.4
(22) Anmeldetag: 17.01.1996
(51) Int. Cl.: G01M 3/24, F17C 7/04

(54) **Verfahren zur Druckprüfung eines zur Lagerung von Flüssiggas vorgesehenen Flüssiggasbehälters**
Method for testing the pressure of a liquid gas container used for storing a liquid gas
Méthode pour tester la pression d'un réservoir à gaz liquide utilisé dans le stockage de gaz liquide

(30) Priorität: 20.01.1995 AT 8495
(43) Veröffentlichungstag der Anmeldung: 24.07.1996
(73) Patentinhaber: Technischer Überwachungs-Verein Österreich, 1010 Wien (AT)
(72) Erfinder: Schauritsch, Gert, Ing., A-3400 Klosterneuburg (AT)
(74) Vertreter: Kopecky, Helmut, Dipl.-Ing. Kopecky & Schwarz Patentanwälte

(56) Entgegenhaltungen:
- EP-A- 0 148 591
- EP-A- 0 667 484
- DE-A- 3 629 721
- DE-A- 4 226 326
- US-A- 5 375 580
- US-A- 5 386 699
- US-A- 5 415 001
- US-A- 5 479 966
- PATENT ABSTRACTS OF JAPAN vol. 009, no. 114 (M-380), 18.Mai 1985 & JP-A-60 000290 (MATSUSHITA DENKI SANGYO KK), 5.Januar 1985,
- PATENT ABSTRACTS OF JAPAN vol. 009, no. 206 (M-406), 23.August 1985 & JP-A-60 065997 (MITSUBISHI JUKOGYO KK), 15.April 1985,

## Beschreibung

Die Erfindung betrifft ein Verfahren zur Druckprüfung eines zur Lagerung von Flüssiggas vorgesehenen Flüssiggasbehälters, insbesondere eines ortsfesten Flüssiggasbehälters, durch Entnahme von Flüssiggas aus dem Flüssiggasbehälter, Überführen des Flüssiggases in den gasförmigen Zustand und Erzielen einer Drucksteigerung im Flüssiggasbehälter durch Rückführen des Flüssiggases im gasförmigen Zustand in den Flüssiggasbehälter, wobei während der im Flüssiggasbehälter stattfindenden Drucksteigerung laufend vom Flüssiggasbehälter ausgehende Schallemissions-Signale detektiert werden.

Flüssiggasbehälter müssen nach geltenden Vorschriften wiederkehrenden Untersuchungen, insbesondere Wasserdruckproben und inneren Untersuchungen, unterzogen werden. Solche Untersuchungen stellen für den Betreiber eines Flüssiggasbehälters ein beträchtliches Problem dar, da sie zu Betriebsunterbrechungen führen. Außerdem laufen durch solche Untersuchungen neben den durch die Betriebsunterbrechungen verursachten Kosten noch beträchtliche Kosten der Untersuchungen selbst auf. So ist es notwendig, den Behälter zu entleeren, wobei zusätzlich noch Umweltprobleme auftreten, da ein Entweichen von Restgasmengen nicht verhindert werden kann. Weiters muß der Behälter gespült werden, und es muß auch das Wasser, das zur Wasserdruckprobe verwendet wird, nach Durchführung der Untersuchung entsorgt werden. Mit der Wasserdruckprobe Hand in Hand können Korrosionsprobleme im Behälter durch Restwasser entstehen sowie Dichtungsprobleme bei den Behälterverschlüssen auftreten.

Aus all den Gründen hat sich eine Schallemissionsprüfung als begleitende Kontrolle von pneumatischen Druckproben als besonders günstige Alternative erwiesen und immer größere Bedeutung erlangt. Hierbei werden während der Druckbeaufschlagung des Flüssiggasbehälters aus dem Werkstoff emittierende Schallimpulse gemessen. Die von Fehlstellen im Druckbehältermantel ausgesendeten Schallemissionssignale sind charakteristisch und von jenen, die auftreten, wenn keine Fehlstellen vorhanden sind, deutlich zu unterscheiden. Die Schallimpulse werden mit empfindlichen Sonden, die an der Oberfläche des Druckbehälters angeordnet werden, aufgenommen, in elektrische Impulse umgewandelt und nach einer entsprechenden Aufbereitung einer Auswerteelektronik zugeführt. Anhand statistischer Auswerteverfahren ist es dann möglich, den Druckbehälter als fehlerhaft oder als in Ordnung befindlich einzustufen.

Bezüglich der erforderlichen Drucksteigerung zur Anwendung des Schallemissionsprüfverfahrens ist es bei dem einleitend beschriebenen aus der österreichischen bekanntgemachten Patentschrift A1-B-399 780 bekannt, aus dem Flüssiggasbehälter Flüssigphase zu entnehmen, diese zu erwärmen, bis sie durch Verdampfung in Gasphase umgewandelt ist, und sodann zur Erzielung des notwendigen - und durch gesetzliche Vorschriften festgelegten - Prüfdruckes (z.B. 12,5 bar) mit Hilfe eines Kompressors über einen Druckschlauch dem Flüssiggasbehälter wiederum zuzuführen.

Wesentlich für die Durchführung der Schallemissions-Messung ist bei diesem bekannten Verfahren eine Schall- und Schwingungsabsorption, durch welche durch den Kompressor entstehender Körperschall bzw. die bei der Beschickung des Flüssiggasbehälters mit verdampftem Flüssiggas weitergeleiteten Schwingungen so weit gedämpft werden, daß Störungen bei der Schallemissions-Messung vermieden werden. Solcher Körperschall bzw. weitergeleitete Schwingungen stören die Schallemissions-Signale. Es kommt dann zu Überlagerungen zwischen Stör- und Nutzsignalen, so daß eine Beurteilung des Flüssiggasbehälters nur mehr eingeschränkt oder gar nicht mehr möglich ist. Hierbei ist noch zu beachten, daß Störsignale ein relativ breites Frequenzspektrum aufweisen, was dazu führen kann, daß das eigentliche Frequenzspektrum der Nutzsignale überlagert wird.

Wenn der zu prüfende Flüssiggasbehälter nur mehr einen geringen Füllstand der Flüssigphase aufweist und daher ein großes Gasvolumen komprimiert werden muß, kann es bei dem bekannten Verfahren zu weiteren Schwierigkeiten kommen, da dann der Kompressor im oberen Lastbereich - und dadurch mit einer hohen Signal-Amplitude des Störsignales - betrieben werden muß, wobei durch die erhöhte Drehzahl wiederum verstärkt Körperschall bzw. Schwingungen zum Flüssiggasbehälter übertragen werden. Dies bedeutet, daß dann die vorgesehene Dämpfungs- bzw. Schwingungsabsorption nicht ausreicht und somit mit einem unzulässig hohen Störgrad gerechnet werden muß, der die Aussagekraft des Prüfverfahrens stark einschränkt.

Die Erfindung bezweckt die Vermeidung dieser Nachteile und Schwierigkeiten und stellt sich die Aufgabe, ein Verfahren sowie eine Einrichtung zur Durchführung des Verfahrens zu schaffen, welche die Beurteilung eines Flüssiggasbehälters mit größtmöglicher Sicherheit gestatten. Insbesondere sollen Einflüsse des Füllungsgrades des Flüssiggasbehälters ebenso wie durch die Apparatur bedingte Störeinflüsse mit Sicherheit ausgeschaltet sein.

Diese Aufgabe wird erfindungsgemäß dadurch gelöst, daß das dem Flüssiggasbehälter entnommene Flüssiggas einer ortsbeweglichen Servicestation zugeleitet, in der Servicestation mittels einer Heizeinrichtung verdampft und in den Flüssiggasbehälter allein unter Ausnutzung des natürlichen Gaskreislaufes rückgeführt wird.

Es war für die Fachwelt überraschend und nicht vorhersehbar, daß alleine unter Ausnutzung eines natürlichen Gaskreislaufes der erforderliche und durch gesetzliche Vorschriften festgelegte hohe Prüfdruck im Flüssiggasbehälter erreicht werden kann, u.zw. auch dann, wenn das dem Flüssiggasbehälter entnommene Flüssiggas in der ortsbeweglichen Servicestation verdampft wird. Dies war deswegen nicht vorhersehbar, da oftmals zwischen der mobilen Servicestation und dem Flüssiggasbehälter eine größere Entfernung eingehalten werden muß, da die mobile Servicestation oft nicht Flüssiggasbehälter herangebracht werden direkt zum kann.

Somit bestand die Gefahr der Rückkondensation des gasförmigen Mediums in den flüssigen Zustand bereits innerhalb der Gasrückführungsleitung, so daß die Fachwelt bisher davon ausgegangen ist, daß hier unbedingt ein Kompressor zur Rückführung des verdampften Flüssiggases vorgesehen sein muß. Ein Kompressor wurde insbesondere deswegen verwendet, weil Kompressoren schon bisher bei der Umfüllung von Flüssiggas von Tank zu Tank üblicherweise verwendet wurden und eine hohe Umfüllgeschwindigkeit ermöglichten. Damit verbunden wurden die in der Beschreibungseinleitung ausführlich dargelegten Nachteile in Kauf genommen.

Um auch bei tiefen Temperaturen und besonders großen Entfernungen zwischen der mobilen Servicestation und dem Flüssiggasbehälter den erforderlichen Prüfdruck zu erzielen, werden zweckmäßig das gasförmige Flüssiggas während der Rückführung in den Flüssiggasbehälter sowie hierbei eventuell gebildetes Kondensat einer Zusatzerwärmung unterworfen.

Vorteilhaft wird daß das Flüssiggas mittels eines in der Servicestation erhitzten Wärmeträgers verdampft.

Eine Einrichtung zur Durchführung des erfindungsgemäßen Verfahren ist durch die Kombination folgender Merkmale gekennzeichnet:
- eine ortsbewegliche, insbesondere fahrbare Servicestation mit
- einer Heizeinrichtung zur Verdampfung von über eine Flüssiggasleitung vom Flüssiggasbehälter zugeführtem Flüssiggas,
- einer Gasrückführleitung zur Rückführung von verdampftem Flüssiggas von der Heizeinrichtung zum Flüssiggasbehälter und
- mindestens einem Schallemissions-Aufnehmer, der am Flüssiggasbehälter anbringbar ist.

Vorzugsweise ist die Servicestation mit einer weiteren Heizeinrichtung zum Erwärmen eines Wärmeträgers ausgestattet, wobei die weitere Heizeinrichtung mit der Heizeinrichtung für das Flüssiggas über Vor- und Rücklaufleitungen für den Wärmeträger verbunden ist.

Zweckmäßig ist in der Flüssiggasleitung eine Flüssiggasförderpumpe, vorzugsweise in explosionsgeschützter Ausführung, vorgesehen, wobei vorteilhaft die Heizeinrichtung mit Füllstandssonden versehen ist, die mit der Flüssiggasförderpumpe zwecks deren Aktivierung bzw. Inaktivierung gekoppelt sind.

Um den Gaskreislauf in Richtung über die Gasleitung zum Flüssiggasbehälter zu sichern, ist vorteilhaft in der Flüssiggasleitung ein Rückschlagventil vorgesehen, wobei dieses zweckmäßig zwischen der Flüssiggasförderpumpe und der Einmündung der Flüssiggasleitung in die Heizeinrichtung eingebaut ist.

Zur Erzielung eines hohen Temperaturniveaus des Wärmeträgers ist vorteilhaft die Heizeinrichtung zur Erhitzung des Wärmeträgers auf eine Temperatur zwischen 50 und 95°C, vorzugsweise auf eine Temperatur zwischen 80 und 90°C, ausgelegt.

Zur Vermeidung einer Rückkondensierung ist vorteilhaft die von der Heizeinrichtung an der Servicestation zum Flüssiggasbehälter reichende Gasrückführleitung wärmeisoliert ausgeführt.

Zur Erzielung des erforderlichen Prüfdruckes auch bei niedrigen Temperaturen oder großen Entfernungen zwischen der mobilen Servicestation und dem zu prüfenden Flüssiggasbehälter ist gemäß einer bevorzugten Ausführungsform die von der Heizeinrichtung an der Servicestation zum Flüssiggasbehälter reichende Gasrückführleitung mit einer Zusatzheizeinrichtung ausgestattet, wobei diese zweckmäßig elektrisch beheizbar ist.

Gemäß einer anderen Ausführungsform ist die Zusatzheizeinrichtung mit einem in der Servicestation erhitzten Wärmeträger versorgbar.

Zweckmäßig ist die Zusatzheizeinrichtung gegenüber der Servicestation mobil und näher zum Flüssiggasbehälter als die Servicestation in Stellung bringbar.

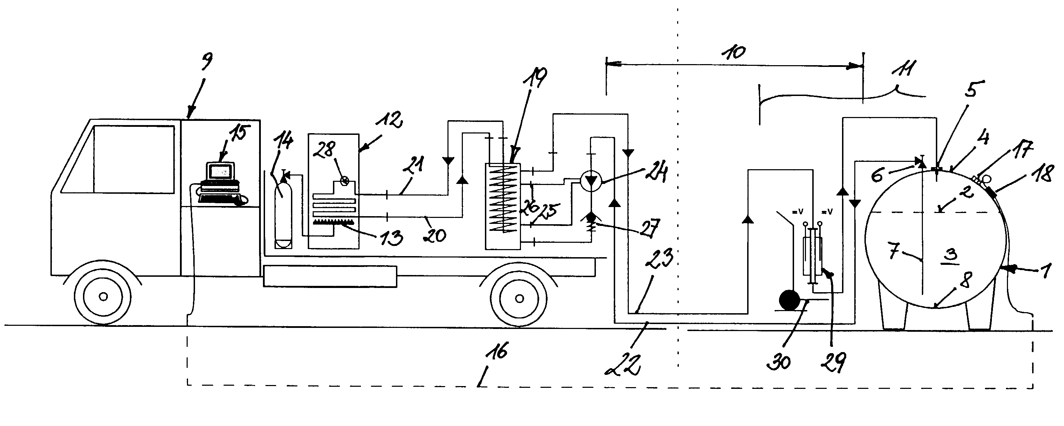

Die Erfindung ist nachfolgend anhand eines in der Zeichnung schematisch dargestellten Ausführungsbeispieles näher erläutert.

Ein zu überprüfender ortsfest aufgestellter Flüssiggasbehälter 1 ist bis zum Niveau 2 mit Flüssiggas 3 gefüllt. An seiner Oberseite 4 befindet sich ein Betankungsventil 5 und neben diesem ein Flüssigphasen-Entnahmeventil 6, von dem ein Peilrohr 7 bis in die Nähe des Bodens 8 des Flüssiggasbehälters 1 führt.

Eine fahrbare Servicestation 9 - ein Service-LkW - ist im Abstand 10, eventuell außerhalb der Schutzzone 11 des Flüssiggasbehälters 1, zur Durchführung einer Überprüfung in Stellung gebracht. Der Service-LkW 9 ist mit einer als Heißwassertherme 12 ausgebildeten Heizeinrichtung, deren Brenner 13 von einem am Service-LkW 9 stationierten Brennstofflagerbehälter 14, z.B. einer Gasflasche, versorgt werden, ausgestattet.

Zur Durchführung einer Schallemissionsprüfung während der Druckbeaufschlagung des Flüssiggasbehälters 1 ist auf dem Service-LkW 9 eine Schallemissions-Meßanlage 15, bestehend aus einem Signalerfassungssystem, einem Signalanalysesystem und einem Signalauswertesystem, angeordnet. Diese Schallemissions-Meßanlage 15 ist über eine Verbindungsleitung 16, die als einfach geschirmtes Koaxialkabel ausgebildet ist, mit dem Schallemissions-Aufnehmer 17, der am Flüssiggasbehälter 1 angeordnet ist, verbunden. Der Schallemissions-Aufnehmer 17 ist am Flüssiggasbehälter 1 mittels einer Magnethalterung befestigt und weist einen Signalvorverstärker 18 auf. Die Verbindungsleitung 16 dient einerseits zur Stromversorgung des Signalvorverstärkers 18 und übernimmt gleichzeitig die Signalübertragung zwischen dem Signalvorverstärker 18 und der Schallemissions-Meßanlage 15.

Auf dem Service-LkW 9 ist weiters eine als Wärmetauscher 19 ausgebildete Heizeinrichtung in Stellung gebracht. Dieser Wärmetauscher 19 ist mit der Heißwassertherme 12 über eine Vorlauf- 20 und Rücklaufleitung 21 verbunden, die zweckmäßig wärmeisoliert ausgeführt sind, u.zw. vorzugsweise als Doppelkammer-Schlauchsystem mit innenliegendem Heißwasservorlauf, was jedoch in der Zeichnung nicht dargestellt ist. Der Wärmetauscher 19 ist einerseits zur Flüssiggasentnahme an das Flüssigphasen-Entnahmeventil 6 mit einer Flüssiggasleitung 22 und andererseits mit einer Gasrückführleitung 23 zur Rückführung von verdampftem Flüssiggas mit dem Betankungsventil 5 verbunden. In der Flüssiggasleitung 22 ist eine Flüssiggasförderpumpe 24, zweckmäßig in explosionsgeschützter Ausführung, vorgesehen, die über zwei höhenmäßig übereinanderliegende Füllstandssonden 25, 26 - die auf kapazitiver Arbeitsweise beruhen - aktiviert und inaktiviert werden kann. In der Flüssiggasleitung 22 ist weiters zwischen der Flüssiggasförderpumpe 24 und dem Wärmetauscher 19 ein Rückschlagventil 27 vorgesehen, so daß das Flüssiggas 3 lediglich in Richtung zum Wärmetauscher 19 strömen kann bzw. das verdampfte Gas lediglich über die Gasrückführleitung 23 in den Flüssiggasbehälter rückgeführt wird.

Die Funktion der Einrichtung ist folgende:

Nach Heranfahren des Service-LkW 9 in die Nähe des Flüssiggasbehälters 1 wird die Flüssiggasleitung 22 an das Flüssigphasen-Entnahmeventil 6 und die Gasrückführleitung 23 des Wärmetauschers 19 an das Betankungsventil 5 angeschlossen. Nach Anbringen des Schallemissions-Aufnehmers 17 am Flüssiggasbehälter 1 kann mit der Prüfung des Flüssiggasbehälters 1 unabhängig von dessen Füllstand 2 - abgesehen von einer gewissen Mindestgasmenge - begonnen werden, d.h. es wird der Wärmeträger, in der Regel Wasser, mittels der Heißwassertherme 12 vorteilhaft auf eine Temperatur von 85°C aufgeheizt.

Mittels einer Förderpumpe 28 der Heißwassertherme 12 wird das Heißwasser über die Vorlaufleitung 20 dem Wärmetauscher 19 zugeführt und über die Rücklaufleitung 21 wiederum zur Heißwassertherme 12 gefördert.

Im Wärmetauscher 19 wird über die Flüssiggasleitung 22 mittels der Flüssiggasförderpumpe 24 Flüssiggas auf einem Niveau zwischen den beiden Füllstandssonden 25, 26 gehalten. Das verdampfte Flüssiggas 3 strömt über die Gasrückführleitung 23 und das geöffnete Betankungsventil 5 in den Flüssiggasbehälter 1, u.zw. alleine unter Ausnützung eines natürlichen Gaskreislaufes, d.h. ohne Verwendung einer Förderpumpe, wie eines Kolbenkompressors. Das in den Flüssiggasbehälter 1 einströmende verdampfte Gas bewirkt eine Temperaturerhöhung des Flüssiggasbehälters, wodurch in gleicher Weise der Druck im Flüssiggasbehälter steigt. Ein Rückströmen von Flüssiggas über die Flüssiggasleitungen 22 und 7 in den Flüssiggasbehälter 1 wird durch das Rückschlagventil 27 vermieden.

Käme es z.B. wegen geringer Außentemperaturen zu einer Rückverflüssigung des verdampften Gases auf dem Weg vom Wärmetauscher 19 bis zum Betankungsventil 5, so kann dies durch eine Zusatzheizeinrichtung 29, die in der Gasrückführleitung 23 vorgesehen ist, vermieden werden. Diese Zusatzheizeinrichtung 29 ist gemäß dem dargestellten Ausführungsbeispiel elektrisch beheizbar und weist nur ein sehr geringes Gewicht auf, so daß sie von dem Service-LkW 9 leicht abgehoben und in der Nähe des zu prüfenden Flüssiggasbehälters 1 in Stellung gebracht werden kann, beispielsweise, wie in der Zeichnung angedeutet, mittels einer Rodel 30.

Diese Zusatzheizeinrichtung 29 kann aber auch mit dem in der Heißwassertherme 12 erhitzten Heißwasser versorgt werden. Es ist auch denkbar, die Zusatzheizeinrichtung als beheizbare Gasrückführleitung 23 auszubilden, wobei es eventuell genügt, lediglich einen Teil-Längsbereich der Gasrückführleitung 23 zu beheizen.

## Patentansprüche

1. Verfahren zur Druckprüfung eines zur Lagerung von Flüssiggas (3) vorgesehenen Flüssiggasbehälters (1), insbesondere eines ortsfesten Flüssiggasbehälters (1), durch Entnahme von Flüssiggas (3) aus dem Flüssiggasbehälter (1), Überführen des Flüssiggases (3) in den gasförmigen Zustand und Erzielen einer Drucksteigerung im Flüssiggasbehälter (1) durch Rückführen des Flüssiggases im gasförmigen Zustand in den Flüssiggasbehälter (1), wobei während der im Flüssiggasbehälter (1) stattfindenden Drucksteigerung laufend vom Flüssiggasbehälter (1) ausgehende Schallemissions-Signale detektiert werden, dadurch gekennzeichnet, daß das dem Flüssiggasbehälter (1) entnommene Flüssiggas (3) einer ortsbeweglichen Servicestation (9) zugeleitet, in der Servicestation (9) mittels einer Heizeinrichtung (19) verdampft und in den Flüssiggasbehälter (1) allein unter Ausnutzung des natürlichen Gaskreislaufes rückgeführt wird.

2. Verfahren nach Anspruch 1, dadurch gekennzeichnet, daß das gasförmige Flüssiggas während der Rückführung in den Flüssiggasbehälter (1) sowie hierbei eventuell gebildetes Kondensat einer Zusatzerwärmung unterworfen wird bzw. werden.

3. Verfahren nach Anspruch 1 oder 2, dadurch gekennzeichnet, daß das Flüssiggas (3) mittels eines in der Servicestation (9) erhitzten Wärmeträgers verdampft wird.

4. Einrichtung zur Durchführung des Verfahrens nach einem oder mehreren der Ansprüche 1 bis 3, mit einer ortsbeweglichen, insbesondere fahrbaren Servicestation (9) mit
• einer Heizeinrichtung (19) zur Verdampfung von über eine Flüssiggasleitung (22) vom Flüssiggasbehälter (1) zugeführtem Flüssiggas (3),
• einer Gasrückführleitung (23) zur Rückführung von verdampftem Flüssiggas von der Heizeinrichtung (19) zum Flüssiggasbehälter (1) und
• mindestens einem Schallemissions-Aufnehmer (17), der am Flüssiggasbehälter (1) anbringbar ist.

5. Einrichtung nach Anspruch 4, dadurch gekennzeichnet, daß die Servicestation (9) mit einer weiteren Heizeinrichtung (12) zum Erwärmen eines Wärmeträgers ausgestattet ist, wobei die weitere Heizeinrichtung (12) mit der Heizeinrichtung (19) für das Flüssiggas über Vor-(20) und Rücklaufleitungen (21) für den Wärmeträger verbunden ist.

6. Einrichtung nach Anspruch 4 oder 5, dadurch gekennzeichnet, daß in der Flüssiggasleitung (22) eine Flüssiggas-Förderpumpe (24), vorzugsweise in explosionsgeschützter Ausführung, vorgesehen ist.

7. Einrichtung nach einem oder mehreren der Ansprüche 4 bis 6, dadurch gekennzeichnet, daß die Heizeinrichtung (19) mit Füllstandssonden (25, 26) versehen ist, die mit der Flüssiggasförderpumpe (24) zwecks deren Aktivierung bzw. Inaktivierung gekoppelt sind.

8. Einrichtung nach einem oder mehreren der Ansprüche 4 bis 7, dadurch gekennzeichnet, daß in der Flüssiggasleitung (22) ein Rückschlagventil (27) vorgesehen ist.

9. Einrichtung nach Anspruch 8, dadurch gekennzeichnet, daß das Rückschlagventil (27) zwischen der Flüssiggasförderpumpe (24) und der Einmündung der Flüssiggasleitung (22) in die Heizeinrichtung (19) eingebaut ist.

10. Einrichtung nach einem oder mehreren der Ansprüche 5 bis 9, dadurch gekennzeichnet, daß die Heizeinrichtung (12, 13, 14) zur Erhitzung des Wärmeträgers auf eine Temperatur zwischen 50 und 95°C, vorzugsweise auf eine Temperatur zwischen 80 und 90°C, ausgelegt ist.

11. Einrichtung nach einem oder mehreren der Ansprüche 4 bis 10, dadurch gekennzeichnet, daß die von der Heizeinrichtung (19) an der Servicestation (9) zum Flüssiggasbehälter (1) reichende Gasrückführleitung (23) wärmeisoliert ausgeführt ist.

12. Einrichtung nach einem oder mehreren der Ansprüche 4 bis 11, dadurch gekennzeichnet, daß die von der Heizeinrichtung (19) an der Servicestation (9) zum Flüssiggasbehälter (1) reichende Gasrückführleitung (23) mit einer Zusatzheizeinrichtung (29) ausgestattet ist.

13. Einrichtung nach Anspruch 12, dadurch gekennzeichnet, daß die Zusatzheizeinrichtung (29) elektrisch beheizbar ist.

14. Einrichtung nach Anspruch 12 oder 13, dadurch gekennzeichnet, daß die Zusatzheizeinrichtung mit einem in der Servicestation erhitzten Wärmeträger versorgbar ist.

15. Einrichtung nach einem oder mehreren der Ansprüche 12 bis 14, dadurch gekennzeichnet, daß die Zusatzheizeinrichtung (29) gegenüber der Servicestation (9) mobil und näher zum Flüssiggasbehälter (1) als die Servicestation (9) in Stellung bringbar ist.

## Claims

1. A method for testing the pressure of a liquid gas container (1) provided for storing a liquid gas (3), in particular a stationary liquid gas container (1), by removing liquid gas (3) from the liquid gas container (1), converting the liquid gas (3) into the gaseous state and obtaining a pressure increase within the liquid gas container (1) by returning into the liquid gas container (1) the liquid gas in the gaseous state, wherein sound emission signals emitted by the liquid gas container (1) are constantly detected during the pressure increase occurring within the liquid gas container (1), characterized in that the liquid gas (3) removed from the liquid gas container (1) is supplied to a travelling service station (9), evaporated within the service station (9) by a heating means (19) and returned into the liquid gas container (1) merely utilizing the natural gas circulation.

2. A method according to claim 1, characterized in that the gaseous liquid gas during its return into the liquid gas container (1) as well as a condensate optionally formed concurrently is/are subjected to additional heating.

3. A method according to claim 1 or 2, characterized in that the liquid gas (3) is evaporated by means of a heat carrier heated within the service station (9).

4. A device for carrying out the method according to one or several of claims 1 to 3 including a travelling, particularly wheeled, service station (9), comprising
- a heating means (19) for evaporating liquid gas (3) supplied from the liquid gas container (1) via a liquid gas duct (22),
- a gas return duct (23) for returning evaporated liquid gas from the heating means (19) to the liquid gas container (1), and
- at least one sound emission sensor (17) capable of being attached to the liquid gas container (1).

5. A device according to claim 4, characterized in that the service station (9) is equipped with a further heating means (12) for heating a heat carrier, said further heating means (12) being connected with the heating means (19) for the liquid gas via advance (20) and return ducts (21) for the heat carrier.

6. A device according to claim 4 or 5, characterized in that a liquid gas conveying pump (24), preferably in an explosion-safe design, is provided in the liquid gas duct (22).

7. A device according to one or several of claims 4 to 6, characterized in that the heating means (19) is provided with level probes (25, 26) which are coupled with the liquid gas conveying pump (24) for the purpose of activating or inactivating the same.

8. A device according to one or several of claims 4 to 7, characterized in that a check valve (27) is provided within the liquid gas duct (22).

9. A device according to claim 8, characterized in that the check valve (27) is installed between the liquid gas conveying pump (24) and the entry of the liquid gas duct (22) into the heating means (19).

10. A device according to one or several of claims 5 to 9, characterized in that the heating means (12, 13, 14) is designed for heating the heat carrier to a temperature of between 50 and 95°C, preferably to a temperature of between 80 and 90°C.

11. A device according to one or several of claims 4 to 10, characterized in that the gas return duct (23) extending from the heating means (19) on the service station (9) to the liquid gas container (1) is heat-insulated.

12. A device according to one or several of claims 4 to 11, characterized in that the gas return duct (23) extending from the heating means (19) on the service station (9) to the liquid gas container (1) is equipped with an additional heating means (29).

13. A device according to claim 12, characterized in that the additional heating means (29) is electrically heatable.

14. A device according to claim 12 or 13, characterized in that the additional heating means is suppliable with a heat carrier heated within the service station.

15. A device according to one or several of claims 12 to 14, characterized in that the additional heating means (29) is movable relative to the service station (9) and positionable closer to the liquid gas container (1) than the service station (9).

## Revendications

1. Procédé pour contrôler la pression d'un réservoir de gaz liquide (1) prévu pour le stockage de gaz liquide (3), en particulier d'un réservoir de gaz liquide fixe (1), par prélèvement de gaz liquide (3) dans le réservoir de gaz liquide (1), par passage du gaz liquide (3) à l'état gazeux et par création d'une élévation de pression dans le réservoir de gaz liquide (1) par reflux du gaz liquide à l'état gazeux dans le réservoir de gaz liquide (1), des signaux d'émissions sonores provenant du réservoir de gaz liquide (1) étant détectés en continu pendant que l'élévation de pression se produit dans le réservoir de gaz liquide (1), caractérisé en ce que le gaz liquide (3) prélevé dans le réservoir de gaz liquide (1) est envoyé à une station mobile de traitement (9), vaporisé dans la station de traitement (9) au moyen d'un dispositif de chauffage (19) et renvoyé dans le réservoir de gaz liquide (1) en utilisant uniquement la circulation naturelle du gaz.

2. Procédé selon la revendication 1, caractérisé en ce que, lors de son reflux dans le réservoir de gaz liquide (1), le gaz liquide sous forme gazeuse ainsi que le condensat éventuellement formé est et, respectivement, sont soumis à un réchauffement supplémentaire.

3. Procédé selon la revendication 1 ou 2, caractérisé en ce que le gaz liquide (3) est vaporisé au moyen d'un caloporteur chauffé dans la station de traitement (9).

4. Dispositif pour réaliser le procédé selon une ou plusieurs des revendications 1 à 3, avec une station de traitement (9) mobile, en particulier roulante, comprenant
• un dispositif de chauffage (19) pour la vaporisation de gaz liquide (3) amené du réservoir de gaz liquide (1) par une conduite de gaz liquide (22),
• une conduite de retour de gaz (23) pour ramener le gaz liquide vaporisé du dispositif de chauffage (19) au réservoir de gaz liquide (1) et
• au moins un capteur d'émissions sonores (17) qui peut être implanté sur le réservoir de gaz liquide (1).

5. Dispositif selon la revendication 4, caractérisé en ce que la station de traitement (9) est équipée d'un autre dispositif de chauffage (12) pour réchauffer un caloporteur, ledit autre dispositif de chauffage (12) étant relié au dispositif de chauffage (19) pour le gaz liquide par des conduites d'amenée (20) et de retour (21) pour le caloporteur.

6. Dispositif selon la revendication 4 ou 5, caractérisé en ce qu'une pompe d'alimentation en gaz liquide (24), de préférence de conception antidéflagrante, est implantée sur la conduite de gaz liquide (22).

7. Dispositif selon une ou plusieurs des revendications 4 à 6, caractérisé en ce que le dispositif de chauffage (19) est muni de sondes de niveau (25, 26) qui sont couplées à la pompe d'alimentation en gaz liquide (24) pour activer ou désactiver celle-ci.

8. Dispositif selon une ou plusieurs des revendications 4 à 7, caractérisé en ce qu'une soupape anti-retour (27) est implantée sur la conduite de gaz liquide (22).

9. Dispositif selon la revendication 8, caractérisé en ce que la soupape anti-retour (27) est implantée entre la pompe d'alimentation en gaz liquide (24) et l'orifice débouchant de la conduite de gaz liquide (22) dans le dispositif de chauffage (19).

10. Dispositif selon une ou plusieurs des revendications 5 à 9, caractérisé en ce que le dispositif de chauffage (12, 13, 14) est conçu pour chauffer le caloporteur à une température comprise entre 50 et 95 °C, de préférence à une température comprise entre 80 et 90 °C.

11. Dispositif selon une ou plusieurs des revendications 4 à 10, caractérisé en ce que la conduite de retour de gaz (23) qui, à partir du dispositif de chauffage (19) disposé sur la station de traitement (9), rejoint le réservoir de gaz liquide (1) est de conception calorifuge.

12. Dispositif selon une ou plusieurs des revendications 4 à 11, caractérisé en ce que la conduite de retour de gaz (23) qui, à partir du dispositif de chauffage (19) disposé sur la station de traitement (9), rejoint le réservoir de gaz liquide (1) est équipée d'un dispositif de chauffage supplémentaire (29).

13. Dispositif selon la revendication 12, caractérisé en ce que le dispositif de chauffage supplémentaire (29) peut être chauffé électriquement.

14. Dispositif selon la revendication 12 ou 13, caractérisé en ce que le dispositif de chauffage supplémentaire peut être alimenté avec un caloporteur chauffé dans la station de traitement.

15. Dispositif selon une ou plusieurs des revendications 12 à 14, caractérisé en ce que le dispositif de chauffage supplémentaire (29) est mobile par rapport à la station de traitement (9) et peut être installé plus près du réservoir de gaz liquide (1) que la station de traitement (9).
